# EUROPÄISCHE PATENTSCHRIFT

(11) **EP 1 562 345 B1**
(45) Veröffentlichungstag und Bekanntmachung des Hinweises auf die Patenterteilung: **11.04.2007**
(21) Anmeldenummer: 05001886.0
(22) Anmeldetag: 29.01.2005
(51) Int. Cl.: H04L 29/06

(54) **Videokonferenzkommunikationssystem mit erweiteter graphischer Ausgabe**
communication system for video conferences with enhanced graphical output
Système de communication pour des conférences vidéo avec édition graphique enrichie

(30) Priorität: 05.02.2004 DE 102004005899
(43) Veröffentlichungstag der Anmeldung: 10.08.2005
(73) Patentinhaber: Vodafone Holding GmbH, 40213 Düsseldorf (DE)
(72) Erfinder: Gaida, Klemens, Dr., 40213 Düsseldorf (DE)
(74) Vertreter: Weisbrodt, Bernd

(56) Entgegenhaltungen:
- JP-A- 10 023 385
- US-A- 4 653 086
- US-A- 5 940 082
- MEGGERS J ET AL: "Providing video conferencing for the mobile user" LOCAL COMPUTER NETWORKS, 1996., PROCEEDINGS 21ST IEEE CONFERENCE ON MINNEAPOLIS, MN, USA 13-16 OCT. 1996, LOS ALAMITOS, CA, USA,IEEE COMPUT. SOC, US, 13. Oktober 1996 (1996-10-13), Seiten 526-534, XP010200663 ISBN: 0-8186-7617-5

## Beschreibung

Die vorliegende Erfindung betrifft ein Kommunikationssystem zum Austausch von Informationen zwischen sich an mindestens zwei verschiedenen Orten befindenden Kommunikationspartnern, wobei jeder Ort eine eine Fläche zur Wiedergabe von Informationen bereitstellende Präsentationseinrichtung und eine der Präsentationseinrichtung zugeordnete stiftartig bedienbare Einrichtung zur Erzeugung von Informationen seitens der Fläche aufweist, wobei an einem als Informationsquelle arbeitenden Ort Bewegungen der stiftartig bedienbaren Einrichtung bei der Erzeugung von Informationen seitens der Fläche der zugeordneten Präsentationseinrichtung erfasst, entsprechende Bewegungsinformationen über ein Kommunikationsnetzwerk an mindestens einen als Informationsempfänger arbeitenden anderen Ort übertragen und dort die Bewegungsinformationen in entsprechende Bewegungen der stiftartig bedienbaren Einrichtung zur Erzeugung von Informationen seitens der Fläche der zugeordneten Präsentationseinrichtung umgesetzt werden. Ein derartiges Kommunikationssystem ist beispielsweise seitens der JP 10 023385 A offenbart.

Im Stand der Technik sind sogenannte Flipcharts und sogenannte Whiteboards als Präsentationseinrichtungen mit einer Fläche zur Wiedergabe von Informationen bekannt, wobei mittels stiftartig bedienbarer Einrichtungen, in der Regel Stifte zum Schreiben und/oder Zeichnen Informationen seitens der bereitgestellten Fläche erzeugbar sind. Präsentationseinrichtungen im Sinne der vorliegenden Erfindung sind sowohl eine Flipchart mit Papierunterlagen, ein Whiteboard mit stahlkeramischer Oberfläche als auch ein sogenanntes Touch-Screen einer entsprechenden Datenverarbeitungseinrichtung.

Ferner sind im Stand der Technik Kommunikationssysteme bekannt, welche es sich an verschiedenen Orten befindenden Kommunikationspartnern weitestgehend simultan ermöglichen, Audio- und/oder Videoinformationen auszutauschen. Zu derartigen Kommunikationssystemen gehören beispielsweise Videokonferenzsysteme, welche es sich an verschiedenen Orten befindenden Kommunikationspartnern ermöglichen miteinander - ähnlich persönlichen Gesprächen mit Mimik, Gestik, Reaktionen und dergleichen - zu kommunizieren. Derartige Videokonferenzsysteme ermöglichen ein gemeinsames Arbeiten der Kommunikationspartner an Dokumenten und Unterlagen, welche dazu bisher beispielsweise in elektronischer Form als Dateien für ein Computersystem den Kommunikationspartnern vorliegen und zwischen ausgetauscht werden können. Dabei werden an den verschiedenen Orten jeweils mit einer Kamera Bilder der sich dort befindenden Kommunikationspartner erfasst und entsprechend seitens des anderen Ortes bzw. der anderen Orte den sich dort befindenden Kommunikationspartnern seitens eines Bildschirms oder dergleichen angezeigt. In der Veröffentlichung von Meggers J. et al. "Providing Video Conferencing for the Mobile User" (LOCAL ,COMPUTER NETWORKS, 1996, PROCEEDINGS 21^{st} IEEE CONFERENCE ON MINNEAPOLIS, MN, USA 13 - 16 Oktober 1996, LOS ALAMITOS, CA, USA, IEEE COMPUT. SOC, US, 13. Oktober 1996, Seiten 526-534, XP010200663 ISBN: 0-8186-7617-5) wird die Nutzung von Mobilfunknetzzwerken für derartige Videokonfrenzsysteme offenbart.

Mitunter werden von den jeweiligen an einem Ort befindlichen Kameras auch Aufnahmen einer sich an diesen Orten befindenden Fläche einer Präsentationseinrichtung aufgenommen und seitens der anderen Orte auf einem Bildschirm oder dergleichen Einrichtungen wiedergegeben. Nachteilig ist dabei, dass Informationsänderungen und/oder Ergänzungen an bzw. auf der Fläche einer Präsentationseinrichtung jeweils nur an bzw. auf der Fläche der jeweils vor Ort befindlichen Präsentationseinrichtung vornehmbar sind, so dass nicht an jedem Ort eine identische und gemeinsame Informationsdarstellung gegeben ist. Ferner ist die Qualität der von der Fläche der Präsentationseinrichtung aufgenommenen Bilder hinsichtlich Auflösung und Wiedergabe unzureichend.

Vor diesem Hintergrund liegt der vorliegenden Erfindung die **Aufgabe** zugrunde, ein Kommunikationssystem bereitzustellen, welches unter Meidung der beschriebenen Nachteile einen verbesserten und funktional umfangreicheren Informationsaustausch ermöglicht.

Zur technischen **Lösung** dieser Aufgabe wird mit der vorliegenden Erfindung ein Kommunikationssystem zum Austausch von Informationen zwischen sich an mindestens zwei verschiedenen Orten befindenden Kommunikationspartnern bereitgestellt, bei dem jeder Ort eine eine Fläche zur Wiedergabe von Informationen bereitstellende Präsentationseinrichtung und eine der Präsentationseinrichtung zugeordnete stiftartig bedienbare Einrichtung zur Erzeugung der Informationen seitens der Fläche aufweist, wobei an einem als Informationsquelle arbeitenden Ort Bewegungen der stiftartig bedienbaren Einrichtung bei der Erzeugung von Informationen seitens der Fläche der zugeordneten Präsentationseinrichtung erfasst, entsprechende Bewegungsinformationen über ein Kommunikationsnetzwerk an mindestens einen als Informationsempfänger arbeitenden anderen Ort übertragen und dort die Bewegungsinformationen in entsprechende Bewegungen der stiftartig bedienbaren Einrichtung zur Erzeugung von Informationen seitens der Fläche der zugeordneten Präsentationseinrichtung umgesetzt werden, vorgeschlagen, bei welchem das Kommunikationsnetzwerk ein Mobilfunknetzwerk ist, die Bewegungsinformationen mittels eines paketvermittelnden Dienstes zur mobilen Datenkommunikation des Mobilfunknetzes übertragen werden und die stiftartig bedienbare Einrichtung ein mobiles Endgerät zur Nutzung in dem Mobilfunknetz und/oder eine mit einem mobilen Endgerät zur Nutzung in dem Mobilfunknetz genutzte Zusatzeinrichtung ist.

Der Erfindung liegt die Erkenntnis zugrunde, dass ein - insbesondere hinsichtlich Auflösung und Wiedergabe von Informationen - verbesserter und funktional umfangreicherer Informationsaustausch erzielbar ist, wenn die bei der Erzeugung von Informationen seitens der Fläche einer Präsentationseinrichtung an einem Ort anfallenden Bewegungen der stiftartig bedienbaren Einrichtung zur Erzeugung von Informationen seitens der Fläche der Präsentationseinrichtung erfasst und an dem einen bzw. den anderen Orten in entsprechende Bewegungen der dort befindlichen stiftartig bedienbaren Einrichtung zur Erzeugung von Informationen seitens der Fläche einer dort zugeordneten Präsentationseinrichtung umgesetzt werden.

In einer vorteilhaften Ausgestaltung der Erfindung werden die Bewegungen der stiftartig bedienbaren Einrichtung seitens der stiftartig bedienbaren Einrichtung oder seitens der Präsentationseinrichtung erfasst.

Eine weitere vorteilhafte Ausgestaltung der Erfindung sieht vor, dass die Bewegungsinformationen von der stiftartig bedienbaren Einrichtung oder der Präsentationseinrichtung an dem als Informationsquelle arbeitenden Ort an die stiftartig bedienbare Einrichtung oder die Präsentationseinrichtung an dem mindestens einen als Informationsempfänger arbeitenden anderen Ort übertragen werden.

Vorteilhafterweise werden die Bewegungsinformationen weitestgehend simultan übertragen.

Eine weitere vorteilhafte Ausgestaltung der Erfindung sieht vor, dass an dem als Informationsquelle arbeitenden Ort die stiftartig bedienbare Einrichtung zur Erzeugung von Informationen seitens der Fläche der zugeordneten Präsentationseinrichtung von einem vor Ort befindlichen Kommunikationspartner bewegt wird.

In einer weiteren vorteilhaften Ausgestaltung der Erfindung weist die Präsentationseinrichtung Mittel zum Bewegen der stiftartig bedienbaren Einrichtung zur Erzeugung von Informationen seitens der Fläche der zugeordneten Präsentationseinrichtung auf, mit welchen die stiftartig bedienbare Einrichtung über die Fläche bewegbar ist. In einer bevorzugten Ausgestaltung der Erfindung wird an dem mindestens einen als Informationsempfänger arbeitenden anderen Ort die stiftartig bedienbare Einrichtung zur Erzeugung von Informationen seitens der Fläche der zugeordneten Präsentationseinrichtung von dem Mittel zum Bewegen der stiftartig bedienbaren Einrichtung zur Erzeugung von Informationen seitens der Fläche der Präsentationseinrichtung bewegt.

Eine weitere Ausgestaltung der Erfindung sieht Mittel zur Kalibrierung der Bewegungsinformationen in Abhängigkeit von der zur Verfügung stehenden Größe der Fläche der Präsentationseinrichtung vor. Hierdurch ist eine, vorteilhafterweise automatische, Anpassung an unterschiedliche Größen der Fläche der Präsentationseinrichtung ermöglicht, so dass insbesondere an den Orten verschiedene, unterschiedlich große Flächen aufweisende Präsentationseinrichtungen verwendbar sind.

Um beispielsweise für mehrere Kommunikationspartner Kopien der im Rahmen des Informationsaustausches seitens der Fläche der Präsentationseinrichtungen erzeugten Informationen erstellen zu können und/oder zur Dokumentation des Informationsaustausches werden die Bewegungsinformationen vorteilhafterweise seitens der stiftartig bedienbaren Einrichtung und/oder seitens der Präsentationseinrichtung gespeichert.

In einer bevorzugten Ausgestaltung der Erfindung werden die im Rahmen des Informationsaustausches anfallenden Bewegungsinformationen derart gespeichert, dass die gespeicherten Bewegungsinformationen zur Erstellung eines Endergebnisses der Präsentation verwendbar sind. Da die Kommunikationspartner durch das erfindungsgemäße Kommunikationssystem in der Regel direkt bei der Erzeugung von Informationen seitens der Fläche der jeweiligen Präsentationseinrichtung anwesend sind, ist in der Regel als Gedächtnisstütze das im Rahmen des Informationsaustausches seitens der Präsentationseinrichtung präsentierte Endergebnis der Informationen ausreichend, so dass insbesondere Zwischenschritte bei der Informationserzeugung seitens der Fläche der Präsentationseinrichtung für derartige Anwendungsfälle nicht gespeichert werden müssen.

Vorteilhafterweise ist die stiftartig bedienbare Einrichtung zur Erzeugung von Informationen seitens der Fläche der zugeordneten Präsentationseinrichtung ein Mobilfunktelefon.

In einer weiteren besonders vorteilhaften Ausgestaltung der Erfindung sind die mit der stiftartig bedienbaren Einrichtung zur Erzeugung von Informationen seitens der Fläche der zugeordneten Präsentationseinrichtung erzeugbaren Informationen hinsichtlich Farbe, Strich- bzw. Linienstärke und/oder Strich- bzw. Linienart einstellbar. Dadurch lassen sich die Gestaltungs- und/oder Darstellungsmöglichkeiten der auszutauschenden Informationen weiter steigern.

In einer weiteren vorteilhaften Ausgestaltung der Erfindung ist das erfindungsgemäße Kommunikationssystem Bestandteil eines Konferenzsystems, vorzugsweise eines Videokonferenzsystems.

Weitere Einzelheiten, Merkmale und Vorteile der Erfindung werden nachfolgend anhand des in der Zeichnung dargestellten Ausführungsbeispiels näher erläutert. Dabei zeigt:

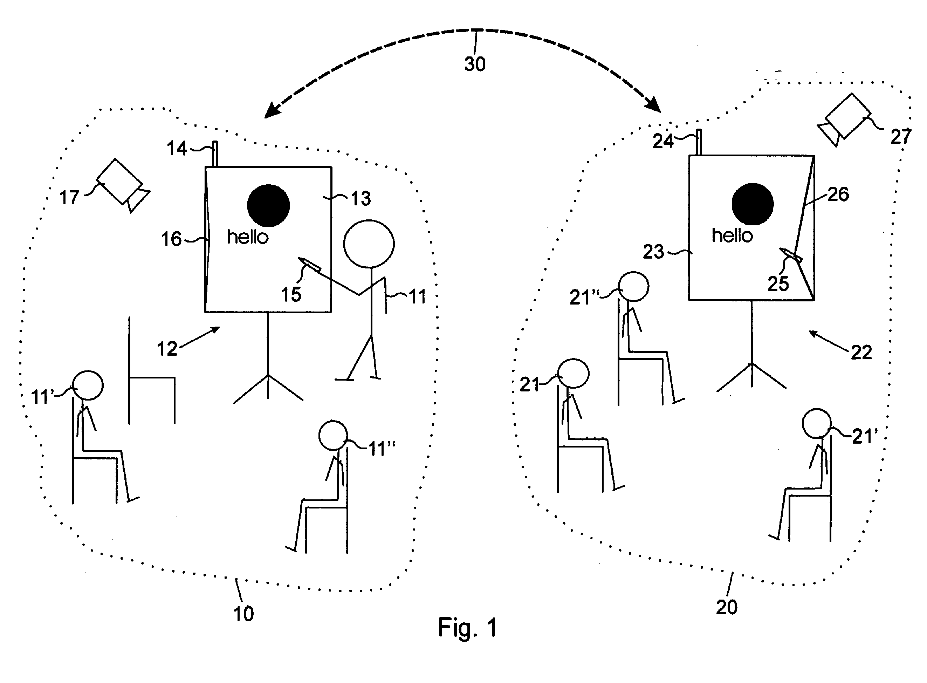

- Fig. 1: in einer schematischen Prinzipdarstellung ein Ausführungsbeispiel eines erfindungsgemäßen Kommunikationssystems.

Fig. 1 zeigt zwei räumlich voneinander getrennte Orte 10 und 20, an welchen sich verschiedene Kommunikationspartner 11, 11', 11" und 21, 21', 21" befinden. An jedem Ort 10 und 20 ist eine eine Fläche 13. 23 bereitstellende Präsentationseinrichtung 12, 22, vorliegend ein Flipchart, vorhanden. Auf der Fläche 13, 23 sind mit einer der Präsentationseinrichtung 12, 22 zugeordneten stiftartig bedienbaren Einrichtung 15, 25 Informationen erzeugbar, vorliegend beispielhaft ein Logo und einen Text. Audio- und/oder Videosignale der sich an den jeweiligen Orten 10 bzw. 20 befindenden Kommunikationspartner 11, 11', 11" bzw. 21, 21', 21", also Sprache und Bilder, werden mittels entsprechender Einrichtungen 17, 27 - vorliegend symbolisch durch eine Kamera 17, 27 dargestellt - erfasst und an die jeweils anderen an der Kommunikation beteiligten Orte übertragen. Die für die Übertragung der Audio- und/oder Videosignale der sich an den jeweiligen Orten 10 bzw. 20 befindenden Kommunikationspartner 11, 11', 11" bzw. 21, 21', 21" genutzten Kommunikationsverbindungen, beispielsweise eine Festnetzverbindung oder eine Internetverbindung, sind in Fig. 1 aus Gründen der Übersichtlichkeit nicht dargestellt. Seitens der Präsentationseinrichtungen 12, 22 sind Mittel 16, 26 zum Bewegen der stiftartig bedienbaren Einrichtungen 15, 25 vorgesehen, wobei die stiftartig bedienbaren Einrichtungen 15, 25 von den Mitteln 16, 26 entsprechend aufgenommen bzw. gehalten werden. Die in Fig. 1 dargestellten Mittel sind symbolisch durch an der Fläche 13, 23 der Präsentationseinrichtung 12, 22 und miteinander gelenkig verbundene, teleskopierbare Schenkel gebildet, wobei die stiftartig bedienbare Einrichtung im Verbindungsbereich der Schenkel aufgenommen bzw. gehalten ist.

An dem vorliegend als Informationsquelle arbeitenden Ort 10 wird die stiftartig Bedienbare Einrichtung 15 der Präsentationseinrichtung 12 von einem vor Ort 10 befindlichen Kommunikationspartner 11 bedient, wobei der Kommunikationspartner 11 Informationen, vorliegend beispielhaft ein Logo und einen Text, von Hand auf der Fläche 13 der Präsentationseinrichtung 12 aufbringt. Die bei der Informationserzeugung von der stiftartig bedienbaren Einrichtung 15 ausgeführten Bewegungen werden vorliegend seitens der Präsentationseinrichtung 13 erfasst, wozu die stiftartig bedienbare Einrichtung 15 vorliegend mit entsprechenden, eine Sende-/und Empfangseinrichtung 14 eines Mobilfunknetzwerkes 30 umfassenden Mitteln seitens der Präsentationseinrichtung 12 berührungslos verbindbar ist, beispielsweise mittels eine Bluetooth-Verbindung oder dergleichen.

Die an dem als Informationsquelle arbeitenden Ort 10 erfassten Bewegungsinformationen werden vorliegend über ein Mobilfunknetzwerk 30 an die Präsentationseinrichtung 22 des als Informationsempfänger arbeitenden Ortes 20 übertragen und dort von seitens der Präsentationseinrichtung 22 vorgesehenen Sende-/und Empfangseinrichtung 24 erfasst. Die erfassten Bewegungsinformationen werden an dem als Informationsempfänger arbeitenden Ort 20 mittels der an der Präsentationseinrichtung 22 angeordneten Mittel 26 zum Bewegen der stiftartig bedienbaren Einrichtung 25 über die Fläche 23 der Präsentationseinrichtung 22 umgesetzt und die stiftartig bedienbare Einrichtung 25 entsprechend den Bewegungen der stiftartigen Einrichtung 15 an dem als Informationsquelle arbeitenden Ort 10 simultan bewegt. Dabei werden die an dem als Informationsquelle arbeitenden Ort 10 von dem Kommunikationspartner 11 auf der Fläche 13 der Präsentationseinrichtung 12 erzeugten Informationen weitestgehend simultan seitens der Fläche 23 der Präsentationseinrichtung 22 an dem als Informationsempfänger arbeitenden Ort 20 erzeugt und den sich dort befindenden Kommunikationspartnern 21, 21', 21" präsentiert.

Das in der Figur dargestellte Ausführungsbeispiel dient lediglich der Erläuterung der Erfindung und ist für diese nicht beschränkend.

### Bezugszeichenliste

- 10: Ort/Informationsquelle
- 11, 11', 11": Kommunikationspartner (Ort (10))
- 12: Präsentationseinrichtung (Ort (10))
- 13: Fläche (Präsentationseinrichtung (12))
- 14: Sende-/Empfangseinrichtung Kommunikationsnetzwerk (Ort (10))
- 15: stiftartig bedienbare Einrichtung (Ort (10))
- 16: Mittel zum Bewegen der stiftartig bedienbaren Einrichtung (15)
- 17: Audio-Nideoerfassung/Kamera (Ort (10))
- 20: Ort/Informationsempfänger
- 21, 21', 21": Kommunikationspartner (Ort (20))
- 22: Präsentationseinrichtung (Ort (20))
- 23: Fläche (Präsentationseinrichtung (22))
- 24: Sende-/Empfangseinrichtung Kommunikationsnetzwerk (Ort (20))
- 25: stiftartig bedienbare Einrichtung (Ort (20))
- 26: Mittel zum Bewegen der stiftartig bedienbaren Einrichtung (25)
- 27: Audio-/Videoerfassung/Kamera (Ort (20))
- 30: Datenübertragung/Kommunikationsnetzwerk

## Patentansprüche

1. Kommunikationssystem zum Austausch von Informationen zwischen sich an mindestens zwei verschiedenen Orten (10, 20) befindenden Kommunikationspartnern (11, 11', 11 ", 21, 21', 21 "), umfassend eine Fläche (13, 23) an jedem der Orte (10, 20) zur Wiedergabe von Informationen bereitstellende Präsentationseinrichtung (12, 22) und eine der Präsentationseinrichtung (12, 22) zugeordnete stiftartig bedienbare Einrichtung (15, 25) zur Erzeugung von Informationen seitens der Fläche (13, 23) sowie ein kommunikationsnetzwerk (30), wobei an einem als Informationsquelle arbeitenden Ort (10) Bewegungen der stiftartig bedienbaren Einrichtung (15) bei der Erzeugung von Informationen seitens der Fläche (13) der zugeordneten Präsentationseinrichtung (12) erfasst, entsprechende Bewegungsinformationen über das Kommunikationsnetzwerk (30) an mindestens einen als Informationsempfänger arbeitenden anderen Ort (20) übertragen und dort die Bewegungsinformationen in entsprechende Bewegungen der stiftartig bedienbaren Einrichtung (25) zur Erzeugung von Informationen seitens der Fläche (23) der zugeordneten Präsentationseinrichtung (22) umgesetzt werden,
das Kommunikationsnetzwerk (30) ein Mobilfunknetzwerk ist, die Bewegungsinformationen mittels eines paketvermittelnden Dienstes zur mobilen Datenkommunikation GPRS des Möbilfunknetzes übertragen werden, **dadurch gekennzeichnet, daß** die stiftartig bedienbare Einrichtung (15, 25) ein mobiles Endgerät zur Nutzung in dem Mobilfunknetz (30) und/oder eine mit einem mobilen Endgerät zur Nutzung in dem Mobilfunknetz (30) genutzte Zusatzeinrichtung ist.

2. Kommunikationssystem nach Anspruch 1, **dadurch gekennzeichnet, dass** die Bewegungen der stiftartig bedienbaren Einrichtung (15, 25) seitens der stiftartig bedienbaren Einrichtung (15, 25) oder seitens der Präsentationseinrichtung (12, 22) erfasst werden.

3. Kommunikationssystem nach Anspruch 1 Oder Anspruch 2, **dadurch gekennzeichnet, dass** die Bewegungsihformationen von der stiftartig bedienbaren Einrichtung (15) oder der Präsentationseinrichtung (12) an dem als Informationsquelle arbeitenden Ort (10) an die stiftartig bedienbare Einrichtung (25) oder die Präsentationseinrichtung (22) an dem mindestens einen als Informationsempfänger arbeitenden anderen Ort (20) übertragen werden.

4. Kommunikationssystem nach einem der Ansprüche 1 bis 3, **dadurch gekennzeichnet, dass** die Bewegungsinformationen von der stiftartig bedienbaren Einrichtung (15) weitestgehend simultan übertragen werden.

5. Kommunikationssystem nach einem der Ansprüche 1 bis 4, **dadurch gekennzeichnet, dass** an dem als Informationsquelle arbeitenden Ort (10) die stiftartig bedienbare Einrichtung (15) zur Erzeugung von Informationen seitens der Fläche (13) der zugeordneten Präsentationseinrichtung (12) von einem vor Ort befindlichen Kommunikationspartner (11) bewegt wird.

6. Kommunikationssystem nach einem der Ansprüche 1 bis 5, **dadurch gekennzeichnet, dass** die Präsentationseinrichtung (12, 22) Mittel (16, 26) zum Bewegen der stiftartig bedienbaren Einrichtung (15, 25) zur Erzeugung von Informationen seitens der Fläche (13, 23) aufweist, mit welchen die stiftartig bedienbare Einrichtung (15, 25) über die Fläche (13, 23) bewegbar ist.

7. Kommunikationssystem nach Anspruch 6, **dadurch gekennzeichnet, dass** an dem mindestens einen als Informationsempfänger arbeitenden anderen Ort (20) die stiftartig bedienbare Einrichtung (25) zur Erzeugung von Informationen seitens der Fläche (23) der zugeordneten Präsentationseinrichtung (22) von dem Mittel (26) zum Bewegen der stiftartig bedienbaren Einrichtung (25) zur Erzeugung von Informationen seitens der Fläche (23) der Präsentationseinrichtung (22) bewegt wird.

8. Kommunikationssystem nach einem der Ansprüche 1 bis 7, **gekennzeichnet durch** Mittel zur Kalibrierung der Bewegungsinformationen in Abhängigkeit von der zur Verfügung stehenden Größe der Fläche (13, 23) der Präsentationseinrichtung (12, 22).

9. Kommunikationssystem nach einem der Ansprüche 1 bis 8, **dadurch gekennzeichnet, dass** die Bewegungsinformationen seitens der stiftartig bedienbaren Einrichtung (15, 25) und/oder seitens der Präsentationseinrichtung (12, 22) gespeichert werden.

10. Kommunikationssystem nach Anspruch 9, **dadurch gekennzeichnet, dass** die im Rahmen des Informationsaustausches anfallenden Bewegungsinformationen von der stiftartig bedienbaren Einrichtung (15) derart gespeichert werden, dass die gespeicherten Bewegungsinformationen zur Erstellung eines Endergebnisses einer Präsentation verwendbar sind.

11. Kommunikationssystem nach einem der Ansprüche 1 bis 10, **dadurch gekennzeichnet, dass** das mobile Endgerät ein Mobilfunktelefon ist.

12. Kommunikationssystem nach einem der Ansprüche 1 bis 11, **dadurch gekennzeichnet, dass** die mit der stiftartig bedienbaren Einrichtung (15, 25) zur Erzeugung von Informationen seitens der Fläche (13, 23) der zugeordneten Präsentationseinrichtung (12, 22) erzeugbaren Informationen hinsichtlich Farbe, Strich- bzw. Linienstärke und/oder Strich-bzw. Linienart einstellbar sind.

13. Kommunikationssystem nach einem der Ansprüche 1 bis 12, **dadurch gekennzeichnet, dass** dieses Bestandteil eines Konferenzsystems, vorzugsweise eines Videokonferenzsystems, ist.

## Claims

1. Communication system for exchanging information between communication partners (11, 11', 11 ", 21, 21', 21 ") located at at least two different locations (10, 20), comprising a presentation device (12, 22) providing a surface (13, 23) at each of the locations (10, 20) for reproducing information and a device (15, 25), which can be operated in the manner of a pen, associated with the presentation device (12, 22) for generating information on the surface (13, 23), and a communication network (30), wherein movements of the device (15), which can be operated in the manner of a pen, during the generation of information on the surface (13) of the associated presentation device (12) are detected at a location (10) operating as information source, corresponding movement information is transmitted via the communication network (30) to at least one other location (20) operating as information receiver and the movement information is there converted into corresponding movements of the device (25), which can be operated in the manner of a pen, for generating information on the surface (23) of the associated presentation device (22), the communication network (30) is a mobile radio network, the movement information is transmitted by means of a packet-switched service for mobile data communication of the mobile radio network, **characterized in that** the device (15, 25), which can be operated in the manner of a pen, is a mobile terminal for use in the mobile radio network (30), and/or a supplementary device used with a mobile terminal for use in the mobile radio network (30).

2. Communication system according to Claim 1, **characterized in that** the movements of the device (15, 25), which can be operated in the manner of a pen, are detected by the device (15, 25) which can be operated in the manner of a pen or by the presentation device (12, 22).

3. Communication system according to Claim 1 or Claim 2, **characterized in that** the movement information is transmitted by the device (15), which can be operated in the manner of a pen, or the presentation device (12) at the location (10) operating as information source to the device (25), which can be operated in the manner of a pen, or the presentation device (22) at the at least one other location (20) operating as information receiver.

4. Communication system according to one of Claims 1 to 3, **characterized in that** the movement information is transmitted largely simultaneously by the device (15) which can be operated in the manner of a pen.

5. Communication system according to one of Claims 1 to 4, **characterized in that** the device (15), which can be operated in the manner of a pen, is moved by a communication partner (11) located on site for generating information on the surface (13) of the associated presentation device (12) at the location (10) operating as information source.

6. Communication system according to one of Claims 1 to 5, **characterized in that** the presentation device (12, 22) has means (16, 26) for moving the device (15, 25), which can be operated in the manner of a pen, for generating information on the surface (13, 23), by means of which the device (15, 25), which can be operated in the manner of a pen, can be moved over the surface (13, 23).

7. Communication system according to Claim 6, **characterized in that** the device (25), which can be operated in the manner of a pen, for generating information on the surface (23) of the associated presentation device (22) is moved by the means (26) for moving the device (25), which can be operated in the manner of a pen, for generating information on the surface (23) of the presentation device (22) at the at least one other location (20) operating as information receiver.

8. Communication system according to one of Claims 1 to 7, **characterized by** means for calibrating the movement information in dependence on the available size of the surface (13, 23) of the presentation device (12, 22).

9. Communication system according to one of Claims 1 to 8, **characterized in that** the movement information is stored by the device (15, 25), which can be operated in the manner of a pen, and/or by the presentation device (12, 22).

10. Communication system according to Claim 9, **characterized in that** the movement information from the device (15) which can be operated in the manner of a pen, occurring during the information exchange, is stored in such a manner that the stored movement information can be used for generating a final result of a presentation.

11. Communication system according to one of Claims 1 to 10, **characterized in that** the mobile terminal is a mobile radio telephone.

12. Communication system according to one of Claims 1 to 11, **characterized in that** the information which can be generated by means of the device (15, 25), which can be operated in the manner of a pen, for generating information on the surface (13, 23) of the associated presentation device (12, 22) can be adjusted with regard to colour, thickness of line and/or type of line.

13. Communication system according to one of Claims 1 to 12, **characterized in that** it is a component of a conference system, preferably a video conference system.

## Revendications

1. Système de communication pour l'échange d'informations entre des correspondants (11, 11', 11", 21, 21', 21"), qui se trouvent à au moins deux endroits différents (10, 20), comprenant un dispositif de présentation (12, 22) qui fournit une surface (13, 23) à chacun des endroits (10,20) pour la reproduction des informations, et un dispositif (15, 25) qui est manoeuvrable à la manière d'un stylo et qui est attribué au dispositif de présentation (12, 22) pour la génération d'informations par moyen de la surface (13, 23) ainsi qu'un réseau de communication (30), des mouvements du dispositif (15) manoeuvrable à la manière d'un stylo étant détectés à un endroit (10) travaillant comme source d'informations pendant la génération des informations par la surface (13) du dispositif de présentation (12) attribué, des informations de mouvement correspondantes étant transmises par le réseau de communication (30) à au moins un autre endroit (20) qui travaille comme récepteur d'informations et les informations de mouvement étant converties en mouvements correspondants du dispositif (25) manoeuvrable à la manière d'un stylo pour la génération d'informations par moyen de la surface (23) du dispositif de présentation (22) attribué, le réseau de communication (30) étant un réseau de service radiotéléphonique mobile, les informations de mouvement étant transmises par GPRS du réseau de service radiotéléphonique mobile, **caractérisé en ce que** le dispositif (15, 25) manoeuvrable à la manière d'un stylo est un terminal mobile utilisable dans le réseau de service radiotéléphonique mobile (30) et/ou un dispositif supplémentaire qu'on utilise ensemble avec le terminal mobile utilisable dans le réseau de service radiotéléphonique mobile (30).

2. Système de communication selon la revendication 1, **caractérisé en ce que** les mouvements du dispositif (15, 25) manoeuvrable à la manière d'un stylo sont détectés par le dispositif (15, 25) manoeuvrable à la manière d'un stylo ou par le dispositif de présentation (12, 22).

3. Système de communication selon la revendication 1 ou la revendication 2, **caractérisé en ce que** les informations de mouvement sont transmises du dispositif manoeuvrable à la manière d'un stylo (15) ou du dispositif de présentation (12) à l'endroit (10) travaillant comme source d'informations au dispositif manoeuvrable à la manière d'un stylo (25) ou au dispositif de présentation (22) à l'au moins un autre endroit (20) travaillant comme récepteur d'informations.

4. Système de communication selon l'une des revendications 1 à 3, **caractérisé en ce que** les informations de mouvement sont essentiellement transmises de manière simultanée par le dispositif manoeuvrable à la manière d'un stylo (15).

5. Système de communication selon l'une des revendications 1 à 4, **caractérisé en ce que** le dispositif manoeuvrable à la manière d'un stylo (15) pour la génération d'informations par moyen de la surface (13) du dispositif de présentation (12) attribué à l'endroit (10) travaillant comme source d'informations est déplacé par un correspondant (11) qui se trouve sur place.

6. Système de communication selon l'une des revendications 1 à 5, **caractérisé en ce que** le dispositif de présentation (12, 22) comprend des moyens (16, 26) pour déplacer le dispositif manoeuvrable à la manière d'un stylo (15, 25) pour la génération d'informations par moyen de la surface (13, 23), par moyen desquels le dispositif manoeuvrable à la manière d'un stylo (15, 25) peut être déplacé sur la surface (13, 23).

7. Système de communication selon la revendication 6, **caractérisé en ce qu'**à l'au moins un autre endroit (20) travaillant comme récepteur d'informations le dispositif manoeuvrable à la manière d'un stylo (25) pour la génération d'informations par moyen de la surface (23) du dispositif de présentation (22) attribué est déplacé par le moyen (26) pour déplacer le dispositif manoeuvrable à la manière d'un stylo (25) pour la génération d'informations par moyen de la surface (23) du dispositif de présentation (22).

8. Système de communication selon l'une des revendications 1 à 7, **caractérisé par** des moyens de calibrage des informations de mouvement en fonction de la dimension disponible de la surface (13, 23) du dispositif de présentation (12, 22).

9. Système de communication selon l'une des revendications 1 à 8, **caractérisé en ce que** les informations de mouvement sont mémorisées par le dispositif manoeuvrable à la manière d'un stylo (15, 25) et/ou par le dispositif de présentation (12, 22).

10. Système de communication selon la revendication 9, **caractérisé en ce que** les informations de mouvement générées dans le contexte de l'échange d'informations sont mémorisées par le dispositif manoeuvrable à la manière d'un stylo (15), de sorte qu'on peut utiliser les informations de mouvement mémorisées pour obtenir un résultat final d'une présentation.

11. Système de communication selon l'une des revendications 1 à 10, **caractérisé en ce que** le terminal mobile est un radiotéléphone mobile.

12. Système de communication selon l'une des revendications 1 à 11, **caractérisé en ce que** les informations qu'on peut générer à l'aide du dispositif manoeuvrable à la manière d'un stylo (15, 25) pour la génération d'informations par moyen de la surface (13, 23) du dispositif de présentation (12, 22) attribué sont réglables par rapport à la couleur, à la grosseur de trait ou de ligne et/ou au type de trait ou de ligne.

13. Système de communication selon l'une des revendications 1 à 12, **caractérisé en ce que** celui-ci est un élément d'un système de conférences, de préférence d'un système de conférences vidéo.
